# EUROPÄISCHE PATENTSCHRIFT

(11) **EP 1 424 129 B1**
(45) Veröffentlichungstag und Bekanntmachung des Hinweises auf die Patenterteilung: **02.01.2008**
(21) Anmeldenummer: 03027083.9
(22) Anmeldetag: 25.11.2003
(51) Int. Cl.: B01L 3/02, G01N 35/10

(54) **Verfahren zum Kanalabgleich einer Mehrkanaldosiervorrichtung und Mehrkanaldosiervorrichtung mit automatischem Kanalabgleich**
Method and device for the automatic adjustment of multichannel dispensers
Distributeur et méthode pour l'ajustement automatique de distributeurs à canaux multiples

(30) Priorität: 26.11.2002 DE 10255595
(43) Veröffentlichungstag der Anmeldung: 02.06.2004
(73) Patentinhaber: CyBio AG, 07745 Jena (DE)
(72) Erfinder: Zimmermann, Peter, 07768 Kahla (DE); Rausch, Torsten, 07745 Jena (DE); Heisse, Gerd, 07745 Jena (DE); Köberich, Hartmut, 07768 Kahla (DE); Renard, Simon, 07749 Jena (DE); Moore, Thomas, 07751 Drackendorf (DE); Krämer, Wolfgang, 07749 Jena (DE)
(74) Vertreter: Schaller, Renate

(56) Entgegenhaltungen:
- EP-A- 0 810 438
- EP-A- 1 092 473
- US-A- 5 741 554
- US-A1- 2002 124 627

## Beschreibung

Für Mehrkanaldosiervorrichtungen, die heute vorrangig in vollautomatischen Laborgeräten in der pharmakologischen, molekularbiologischen, biochemischen und chemischen Forschung eingesetzt werden, steht grundsätzlich die permanente Aufgabe, eine Vielzahl von winzigen Volumina (Tests) flüssiger Reagenzien (Dispensierflüssigkeit) in kürzester Zeit örtlich und mengenmäßig präzise dosiert auf einen Träger, z.B. eine Mikrotitrationsplatte abzugeben. Die mengenmäßig präzise Dosierung ist entsprechend ein wesentliches Leistungsmerkmal für Mehrkanaldosiervorrichtungen. Dabei ist eine geringe Schwankungsbreite der Volumina über alle Dispensierkanäle oft von höherem Stellenwert als die Genauigkeit der Volumina eines einzelnen Dispensierkanals. Um eine geringe Schwankungsbreite der Volumina und damit einen geringen Variationskoeffizienten zu erzielen werden für die aus dem Stand der Technik gattungsgleichen Vorrichtungen unterschiedliche Maßnahmen getroffen.
Im Unterschied zu vergleichbaren Vorrichtungen für die Drucktechnik, bei denen grundsätzlich nur ein definiertes Volumen nur einer definierten Flüssigkeit abgegeben wird, sollen Mehrkanaldosiervorrichtungen auch geeignet sein, Flüssigkeiten unterschiedlicher physikalischer Eigenschaften, wie der Viskosität, zu dispensieren oder Muster aus Tests unterschiedlicher Dispensierflüssigkeiten und/oder Volumina zu erstellen.

Gattungsgleiche Dosiervorrichtungen unterscheiden sich unter anderem in der Art und Weise, wie die Dispensierflüssigkeit zur jeweiligen Auslassöffnung eines Dispensierkanals (Spitze bzw. Düse) gelangt und mit welchen technischen Mitteln eine dosierte Abgabe bewirkt wird.
Bezüglich der Aufnahme der Dispensierflüssigkeit unterscheiden sich bekannte Vorrichtungen in solche, bei denen die Dispensierflüssigkeit über die Auslassöffnung (von vorn) angesaugt wird (pick up dispenser) und solche, bei denen die Dispensierflüssigkeit von hinten zur Auslassöffnung gefördert wird (bulk reagent dispenser). Zur Unterscheidung wird die Auslassöffnung bei pick up dispensern als Spitze und bei bulk reagent dispensern als Düse bezeichnet.

Teilt man die bekannten Vorrichtungen danach ein, mit welchen Mitteln eine dosierte Abgabe erfolgt, so ist erst einmal grundsätzlich zu unterscheiden in technische Lösungen, bei denen die Abgabe nur über alle Spitzen/Düsen gemeinsam gesteuert erfolgt (mani fold Systeme) und solche, bei denen die Abgabe jeder einzelnen Spitze/Düse gesteuert erfolgen kann (multi single channel Systeme).

Um mit einem mani fold System über alle Düsen gleichzeitig ein gleiches Volumen abgeben zu können, sind aus dem Stand der Technik insbesondere unterschiedliche Verteilerstrukturen bekannt, mit denen die Dispensierflüssigkeit aus einem gemeinsamen Vorratsbehälter auf die Düsen gleichmäßig verteilt werden soll. Solche Verteilerstrukturen sind beispielsweise in der US 5,441,204 und im EP 1 036 594 offenbart. Die gleichmäßige Abgabe der Tropfen ist in der US 5,441,204 durch ein elektrostatisches Prinzip realisiert, indem die kontinuierlich geförderte Flüssigkeit elektrostatisch aufgeladen und durch ein elektrisches Feld von der Oberfläche der Düse abgelöst wird. In der EP 1 036 594 wird die Flüssigkeit mit einer hohen Geschwindigkeit über eine elastische Verbindung und einen Verteiler zu den Auslässen befördert. Bei abruptem Stop des Flüssigkeitsstromes, der kurzzeitig aufgrund der Trägheit bestehen bleibt und dadurch ein Zusammenziehen der elastischen Verbindung bewirkt, reißt der Strahl aufgrund der hohen kinetischen Energie ab, angeblich ohne einen Tropfen zu bilden. Flüssigkeitsreste werden mit dem Entspannen der Verbindung aus den Auslässen zurückgezogen.

Diese technische Lösungen setzen zwingend voraus, dass alle Düsen aus einem gemeinsamen Vorratsbehälter gespeist werden, wodurch über alle Düsen immer nur die gleiche Dispensierflüssigkeit abgegeben werden kann. Es besteht damit nicht die Möglichkeit, ein Testmuster unterschiedlicher Dispensierflüssigkeiten zu erstellen. Auch kann in der Abgabemenge der Düsen untereinander nicht differenziert werden. Die Schwankungsbreite der Abgabemengen über die einzelnen Düsen zueinander ist durch die Konstruktion und die Fertigungstoleranzen bestimmt und steuertechnisch nicht beeinflussbar.

Im Unterschied hierzu kann bei multi single channel Systemen die Abgabe jeder einzelnen Spitze/Düse gesteuert erfolgen.

In der Patentanmeldung WO 00/01798 ist eine Mehrkanaldosiervorrichtung beschrieben, bei der alle Düsen sowohl aus einem gemeinsamen als auch aus unterschiedlichen Vorratsbehältern befüllt und auch gezielt unterschiedliche Volumina abgegeben werden können.
Die einzelnen Düsen bilden jeweils mit einer Spritzenpumpe, einer elastischen Verbindung und einem Ventil zueinander unabhängige Dispensierkanäle. Über den definierten Hub der Spritzenpumpe wird in die mit Dispensierflüssigkeit gefüllte elastische Verbindung ein zusätzliches Volumen eingebracht, welches zu einer Ausdehnung und damit zu einem Überdruck in der am anderen Ende mittels des Ventils geschlossenen Verbindung kommt. Mit dem Öffnen des Ventils wird genau dieses zusätzliche Volumen abgegeben, .d.h. das Abgabevolumen durch die einzelnen Düsen wird über den Hub gesteuert.

Im US Patent 5,741,554 ist eine Dosiervorrichtung mit einer Druckpumpe und einem konventionellen Ventil beschrieben. Die Druckpumpe, eine Spritzenpumpe gefüllt mit Dispensierflüssigkeit, ist mit einem Ende eines Schlauches verbunden, an dessen anderem Ende nahe der Düse ein Magnetventil angeordnet ist. Der Kolben der Spritzenpumpe wird motorisch mit einer definierten Geschwindigkeit angetrieben, die für die Durchflussrate bestimmend ist. Gemeinsam mit der Frequenz des Ventils bestimmt sie das dispensierte Volumen. Wenn die Pumpe z.B. eine Durchflussrate von 1 µl/s erzeugt und die Frequenz des Öffnungs-/Schließzyklus des Ventils 100 pro Sekunde beträgt, ist die Tropfengröße 10 nl. Das Abgabevolumen wird demnach über die Hubgeschwindigkeit des Kolbens und die Öffnungsfrequenz der Ventile gesteuert.

Die aufgezeigten Grundprinzipien für die Dosierung des Dispensiervolumens, nämlich über einen Weg (Hub der Spritzenpumpe) und/oder eine Zeit (Öffnungszeit des Ventils) lassen sich mit einer Vielzahl weiterer Beschreibungen belegen.

Man kann davon ausgehen, dass diese Dosiervorrichtungen kalibriert werden, indem einem gewünschten Abgabevolumen (Sollvolumen) über geräteintern abgespeicherte Messkurven ein jeweiliger Weg/Zeit zugeordnet wird. Da die Messkurven, eine Funktion des Volumens über den Weg/ Zeit, jedoch keine stetige lineare Kurve ist, ist der jeweils ermittelte Weg/Zeit für das Sollvolumen fehlerbehaftet, wodurch sich die Schwankungsbreite der realen Abgabevolumina um den eigentlichen Sollwert ergibt.
Bei allen diesen technischen Lösungen ist es eine permanente Aufgabe, dass der Variationskoeffizient (CV) (Abweichung der einzelnen Dispensionsvolumina von deren Mittelwert) des Einzeldispensierers (Dispensierkanal) möglichst klein gehalten wird. Variationskoeffizienten von kleiner 2% werden bei einer Volumenabgabe von 500 nl und kleiner 5% bei 50 nl erreicht. Einen Variationskoeffizienten, bezogen auf den Mittelwert aller Einzeldispensierer (Dispensierkanäle), geben die Hersteller in der Regel nicht an. Schon allein aufgrund der mechanischen Toleranzen der Dispensierkanäle zueinander wird dieser erheblich größer sein.

In der Patentanmeldung WO 02/33423 ist eine Dispensiervorrichtung beschrieben, bei der das Dispensiervolumen eines jeden Dispensierkanals jeweils über die Öffnungszeit des zugehörigen Ventils geregelt wird. In den einzelnen Dispensierkanälen sind Mittel zum Messen des Durchflussvolumens (Flusssensoren) vorhanden sowie elektronische Mittel, die auf die Messwerte der Flusssensoren reagierend die Ventile ansteuern. Eine vom Patentanmelder angebotene 8-Kanal-Dosiervorrichtung, die auf die hier geschützte technische Lösung aufbaut, verspricht einen Variationskoeffizienten CV von kleiner 5 % (bezogen auf den Mittelwert über alle Dispensierkanäle) für eine Volumenabgabe im Bereich von 50 nl - 10 µl.
Vorteilhaft gegenüber den sonstig aufgezeigten Lösungen ist, dass nicht über die Steuerung einer Zeit oder eines Weges das Dispensiervolumen aller Dispensierkanäle bestimmt wird, sondern das Durchflussvolumen als Regelgröße für die Öffnungszeiten des jeweils zugeordneten einzelnen Ventils dient. Sämtliche Toleranzen, die die Dispensiervolumina bis hin zum Flusssensor beeinflussen können, bleiben somit ohne Einfluss auf den Variationskoeffizienten und somit auf Toleranzen der ein Testmuster bildenden Abgabevolumina. Eine vergleichbare Vorrichtung ist in der EP 0 810 438 A2 beschrieben.

Nicht ausgeschlossen werden Toleranzen, die durch Messfehler der Flusssensoren sowie Tropfenbildungen, Kriech- und Verdunstungserscheinungen an den Düsen begründet sind. Auch können Toleranzen in Folge von Schwingungserscheinungen einzelner mit der Dispensierflüssigkeit in Verbindung stehender Bauteile der Vorrichtung sowie Schwingungserscheinungen und Trägheiten der Dispensierflüssigkeiten selbst nicht vollständig ausgeschlossen werden.

Es ist die Aufgabe der Erfindung, ein Verfahren zu schaffen, mit dem die einzeln ansteuerbare Volumenabgabe der Dispensierkanäle einer Mehrkanaldosiervorrichtung genauer abgeglichen werden kann.
Es ist des Weiteren eine Aufgabe der Erfindung, eine zur automatischen Durchführung des Verfahrens geeignete Mehrkanaldosiervorrichtung zu schaffen.
Außerdem soll das Verfahren geeignet sein, um durch den Betreiber der Mehrkanaldosiervorrichtung beliebig oft über deren Lebensdauer durchgeführt werden zu können.
Diese Aufgaben werden erfindungsgemäß mit den Merkmalen des Anspruches 1 und 4 gelöst.

Vorteilhafte Ausführungen sind in den Unteransprüchen beschrieben.

Durch das erfindungsgemäße Abgleichen der Öffnungszeitdauer der Ventile in Abhängigkeit von dem durch den zugehörigen Dispensierkanal abgegebenen Volumen von Dispensierflüssigkeit werden die gerätetechnischen Einflüsse auf das Abgabevolumen ausgeschaltet.
Der Abgleich kann auf ein Sollvolumen (Kalibrierung) oder vorteilhaft auf einen aus den Messwerten statistisch ermittelten Wert, wie z.B. auf einen Medianwert oder einen Mittelwert der zu einer Öffnungszeitdauer zugehörigen realen Abgabevolumina der einzelnen Dispensierkanäle (Equilibrierung) erfolgen.
Die Dispensierkanäle können für verschiedene Dispensierflüssigkeiten und unter verschiedenen Umgebungsbedingungen abgeglichen werden, wodurch auch Schwankungen der Abgabevolumen über unterschiedliche Dispensierflüssigkeiten sowie bei unterschiedlichen Umgebungsbedingen reduziert werden.

Eine Ansteuerung der Öffnungszeitdauer der Ventile in Abhängigkeit der real dispensierten Abgabevolumina setzt voraus, dass eine Messeinrichtung vorhanden ist mit der zu den Abgabevolumina der in einzelne Kavitäten dispensierte Dispensierflüssigkeit zuordenbare Messwerte gemessen werden.
Grundsätzlich sind hierfür die photometrische und die gravimetrische Meßmethode bekannt. Bei der gravimetrischen Messmethode wird die Masse des Abgabevolumens durch Wägung bestimmt und mittels der Dichte in ein Volumen umgerechnet. Hierzu geeignete Messapparaturen sind dem Fachmann bekannt.
Eine häufig angewendete photometrische Messmethode basiert auf der Erfassung der Absorption von Licht in einer homogenen Farbstofflösung. Eine Farbstofflösung, mit bekannter Farbstoffkonzentration, deren Volumen ermittelt werden soll, wird hierfür in eine Basisflüssigkeit mit bekanntem Volumen und bekannter Absorption hineindispensiert. Aus der anschließend gemessenen Absorption kann die Farbstoffkonzentration des Gemisches und daraus das Volumen der hinzugegebenen Farbstofflösung bestimmt werden. Andere photometrische Messmethoden basieren auf der Erfassung der Fluoreszenz oder Lumineszenz der Flüssigkeit. Auch für diese Messmethode sind dem Fachmann geeignete Messapparaturen bekannt.
Weder die Messmethoden zur Bestimmung eines Flüssigkeitsvolumens noch eine dafür geeignete Apparatur sind Gegenstand der Erfindung und werden daher auch nicht näher ausgeführt. Unter einer Messeinrichtung, deren Vorhandensein ein erfindungswesentliches Merkmal darstellt, sollen sämtliche Messapparaturen verstanden werden, die geeignet sind, für ein Flüssigkeitsvolumen relevante Messwerte zu messen.
Die Messeinrichtung wird vorteilhaft in die Mehrkanaldosiervorrichtung integriert, insbesondere wenn sie ein Reader zur photometrischen Messwerterfassung ist, oder aber als Zubehöreinrichtung in das Kalibrierverfahren eingebunden ist. Die von der Messeinrichtung erfassten Messwerte können über eine Datenleitung, einen Datenträger oder durch manuelle Eingabe einer zur Mehrkanaldosiervorrichtung gehörenden Recheneinheit zugeführt werden. Je nachdem, ob die Dispensierkanäle der Mehrkanaldosiervorrichtung zueinander auf ein einzelnes Volumen oder auf einen Volumenbereich abgeglichen werden sollen, ob der Abgleich für verschiedene Flüssigkeiten oder verschiedene Umgebungsbedingungen erfolgen soll, läuft das Abgleichsverfahren in Variationen ab.
Im Sinne der Erfindung soll der Begriff "Abgleich" immer dann verwendet werden, wenn sowohl ein "Kalibrieren" als auch "Equilibrieren" gemeint sein kann.
Kalibrieren im Sinne der Erfindung ist das Abgleichen der einzelnen Dispensierkanäle auf einen oder mehrere Sollwerte. Die Sollwerte können Volumenwerte oder volumenrelevante Werte sein.

Equilibrieren ist das Abgleichen der Dispensierkanäle zueinander durch Anpassung der Abgabevolumina.

Die Erfindung soll nachfolgend an einem Ausführungsbeispiel an Hand an einer Zeichnung näher erläutert werden.

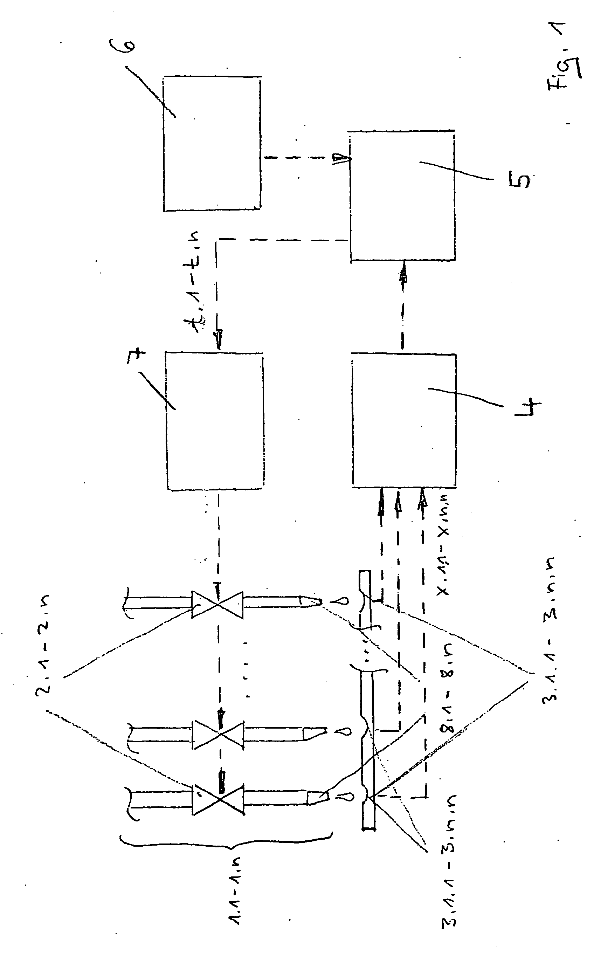

### Hierzu zeigt: Fig. 1 ein Blockschaltbild für eine erfindungsgemäße Vorrichtung

Das in Fig. 1 dargestellte Blockschaltbild ist auf die für die Beschreibung der Erfindung wesentlichen Einheiten beschränkt. Die Mehrkanaldosiervorrichtung umfasst eine Anordnung von einzelnen Dispensierkanälen 1.1-1.n die jeweils bei geöffneten Ventilen 2.1-2.n über je eine Düse 8.1-8.n eine Dispensierflüssigkeit in einzelne Kavitäten 3.1.1-3.n.n abgeben. Eine Messeinrichtung 4 ist so zu den Kavitäten 3.1.1-3.n.n angeordnet, dass sie zeitgleich oder auch nacheinander einen zu den einzelnen Volumina der in die Kavitäten 3.1.1-3.n.n dispensierten Flüssigkeit relevanten Messwert misst, was wie bereits erläutert z.B. die Masse, die Absorption, die Fluoreszenz oder die Lumineszenz sein kann. Die Messeinrichtung 4 steht mit einem Eingang einer Recheneinheit 5 in Verbindung, an deren zweitem Eingang eine Dateneingabeeinheit 6 anliegt und deren Ausgang mit einer Steuereinheit 7 verbunden ist. Die Steuereinheit 7 ist ausgangsseitig mit den Steuereingängen der Ventile 2.1-2.n verbunden.

Das Abgabevolumen der einzelnen Dispensierkanäle 1.1-1.n wird im Arbeitsprozess über die Steuerung der Öffnungszeitdauer t.1-t.n der einzelnen Ventile 2.1-2.n bewirkt.
Um für den Arbeitsprozess die Ventile 2.1-2.n Dispensierkanal-bezogen anzusteuern, wird die Mehrkanaldosiervorrichtung vor dem ersten Arbeitsprozess abgeglichen. Dies kann auch in Zeitabständen durch den Betreiber am realen Arbeitsstandort wiederholt werden.

Nachfolgend wird eine besonders vorteilhafte Ausführung des erfindungsgemäßen Abgleichverfahrens beschrieben. Das Abgleichen soll hier durch Equilibrieren erfolgen.

Für das Equilibrieren aller Dispensierkanäle 1.1-1.n werden alle Ventile 2.1-2.n zeitgleich für eine gleiche Öffnungszeitdauer t.1-t.8 geöffnet, in der die Dispensierkanäle 1.1-1.n, die sich in einer festen Anordnung zueinander befinden, Dispensierflüssigkeit in Kavitäten 3.1.1-3.n.n einer korrelierenden Anordnung dispensieren. Um für die einzelnen Dispensierkanäle einen ausreichend genauen statistischen Mittelwert bilden zu können, wird z.B. für das Equilibrieren einer 8-Kanaldosiervorrichtung (n=8) eine 384er Mikrotitrationsplatte befüllt, d.h. jeder Dispensierkanal 1.1-1.8 befüllt 48 Kavitäten. Trotz gleicher Öffnungszeitdauer t.1-t.8, die nicht zwingend eine zusammenhängende Zeitdauer sein muss, geben weder die Dispensierkanäle 1.1 -1.8 über die 48 Abgaben ein exakt gleiches Volumen ab, noch ist die Volumenabgabe der Dispensierkanäle 1.1-1.8 im Vergleich zueinander identisch, was insbesondere durch die mechanischen und fluidischen Toleranzen der Dispensierkanäle 1.1-1.8 untereinander begründet ist. Mit Hilfe einer dem Fachmann bekannten Messeinrichtung 4 werden 384 volumenrelevante Messwerte x.1.1-x.48.48 gemessen und jeweils der Öffnungszeitdauer t sowie einem Dispensierkanal 1.1-1.8 zugeordnet. Aus den 48 jeweils einem Dispensierkanal 1.1-1.8 zugeordneten Werten wird jeweils ein Mittelwert (der auch ein Medianwert sein kann) x.1-x.8 gebildet und mit der Öffnungszeitdauer t, einem Dispensierkanal 1.1-1.8 zugeordnet, abgespeichert (Speicherdatengruppen).
Um nun die Dispensierkanäle 1.1-1.8 zueinander zu equilibrieren, wird aus den Mittelwerten x.1.1-1.8 ein Medianwert gebildet, auf den anschließend die Dispensierkanäle zueinander abgeglichen werden. Der Medianwert ist ein Wert, gegenüber dem die zugrundeliegenden Messwerte, hier die Mittelwerte x.1-x.8, mit gleicher Häufigkeit Unter- und Überschreitungen aufweisen.
Dem Abgleich auf einen Medianwert liegt die Erkenntnis zugrunde, dass es weniger darauf ankommt, dass die einzelnen Dispensierkanäle 1.1-1.8 ein bestimmtes Sollvolumen abgeben, sondern vielmehr, dass die Schwankungsbreite der abgegebenen Volumina zueinander möglichst minimal sein soll.
Während bei der Kalibrierung der Dispensierkanäle 1.1-1.8 aus den Speicherdatengruppen abgeleitet die Öffnungszeitdauer t.1-t.8 der Ventile 2.1-2.8 für ein Sollvolumen korrigiert werden, was in der Regel für alle Dispensierkanäle 1.1-1.8 notwendig ist, wird beim Equilibrieren der Dispensierkanäle 1.1-1.8 aus den Speicherdaten abgeleitet auf die Öffnungszeitdauer t.1-t.8 der Ventile 2.1-2.8 für den Medianwert korrigiert. Wenn man um den Medianwert eine gewisse Bandbreite (Medianband) z.B. von 2% zulässt, zeigt sich, dass die Öffnungszeitdauer t.1-t.8 nicht für alle der Dispensierkanäle 1.1-1.8 korrigiert werden muss. Je weniger Korrekturen durchgeführt werden müssen, desto geringer sind die Fehler bei der realen Volumenabgabe.
Die Schwankungsbreite der realen Volumenabgabe der Dispensierkanäle 1.1-1.8 zueinander wird daher beim Equilibrieren geringer sein als beim Kalibrieren. Ein Abgleichen auf einen konkreten statistischen Mittelwert ist ebenso denkbar, jedoch wird hier die Öffnungszeitdauer Δt für mehr Dispensierkanäle 1.1-1.8 korrigiert werden müssen.

Die Öffnungszeitdauer t.1-t.8 ventilspezifisch zu korrigieren heißt, je nachdem, ob der jeweilige Mittelwert x.1-x.8 der einzelnen Dispensierkanäle 1.1-1.n oberhalb oder unterhalb des Medianbandes liegt, wird die Öffnungszeitdauer Δt für den jeweiligen Dispensierkanal 1.1-1.n verringert oder verlängert.
Der gesamte Vorgang kann wiederholt werden, um zu prüfen, ob durch die vorgenommenen Korrekturen nunmehr alle Mittelwerte x.1-x.8 im Medianband liegen. Je nachdem, welche Schwankungsbreite man zulassen will, kann das Medianband, indem man die Werte unkorrigiert zulässt, schmaler oder breiter gewählt werden.
Soll die Mehrkanaldosiervorrichtung nur auf ein Volumen equilibriert werden, so kann an dieser Stelle aufgehört werden. Die abschließend erhaltenen Speicherdatengruppen, die jeweils ein Volumen V einer Öffnungszeitdauer t.1-t.8 und einem Dispensierkanal 1.1-1.n zuordnen, werden in der Recheneinheit 5 abgespeichert.
Sollen nun für den Arbeitsprozess der Mehrkanaldosiervorrichtung alle Dispensierkanäle 1.1-1.n dieses Volumen abgeben, so wird die Öffnungszeitdauer t.1-t.8 der einzelnen Ventile 2.1-2.n entsprechend den gespeicherten Speicherdatengruppen individuell gesteuert. Die abgegebenen Volumina liegen dann innerhalb des Medianbandes.
Sollen nun während des Arbeitsprozesses andere Volumina dispensiert werden oder sollen die Dispensierkanäle 1.1-1.8 unterschiedliche Volumina abgeben, so errechnet die Recheneinheit 5 aus den Speicherdatengruppen eine entsprechende Öffnungszeitdauer t.1-t.8 für die Dispensierkanäle 1.1-1.8. Es liegt auf der Hand, dass der Variationskoeffizient jetzt über die Dispensierkanäle 1.1-1.8 größer ausfällt als bei Abgabe des abgeglichenen Volumens, da die Volumen-Zeit-Kennlinien für die einzelnen Dispensierkanäle 1.1-1.8 Unstetigkeiten aufweisen, die bei einer rechnerischen Ermittlung unbeachtet bleiben.

Eine Mehrkanaldosiervorrichtung, die von vornherein für die Abgabe unterschiedlicher Volumina vorgesehen ist, wird daher vorteilhaft für einen Volumenbereich equilibriert.

Dazu wird eine Equilibrierung auf mehrere Volumina (Stützstellen), wie für ein einzelnes Volumen bereits beschrieben, durchgeführt. Entsprechend sind anschließend in der Recheneinheit 5 für die einzelnen Dispensierkanäle 1.1-1.8 mehrere Speicherdatengruppen abgelegt.

Aus den Speicherdatengruppen können Messkurven über einen Volumenbereich gebildet werden, die dem realen Abgabeverhalten der einzelnen Dispensierkanäle 1.1-1.8 näher kommen, als wenn nur mit einem Messpunkt und dem Nullpunkt eine Messgerade festgelegt wird. Je mehr Stützstellen die Messkurve hat, desto genauer ist sie, d.h. je höher der Aufwand, je höher ist auch die Genauigkeit.

Die Speicherdatengruppen können ergänzt werden um Werte weiterer Parameter, wie Druck, Temperatur oder Viskosität der Dispensierflüssigkeit. Die Recheneinheit 5 erstellt dann Messkurven, die nicht nur für jeden Dispensierkanal 1.1-1.8 Volumenwerte einer Öffnungszeitdauer Δt zuordnen, sondern denen auch eine Dispensierflüssigkeit, eine Arbeitstemperatur oder ein Druck, unter dem die Dispensierflüssigkeit steht, zugeordnet ist. Die Schwankungsbreite der realen Abgabevolumen sind so noch weiter reduzieren, wenn zur Ansteuerung der Ventile auf derartig spezifische jeweils relevante Messkurven zurückgegriffen werden kann, um den Steuerwert für die einzelnen Ventile abzugreifen.
Das erfindungsgemäße Verfahren ist nicht gebunden an eine Steuerung des Abgabevolumens der einzelnen Dispensierkanäle 1.1-1.n über die Öffnungszeitdauer Δt von Ventilen2.1-2.n, sondern kann ebenso angewendet werden, wenn die Volumenabgabe über die Steuerung anderer technischer Mittel wie z.B. die Steuerung des Hubes eines Kolbens einer Pumpe realisiert wird.
Das Verfahren kann auch als Korrekturverfahren verwendet werden bei einer geregelten Volumenabgabe. Für eine Vorrichtung, bei der beispielsweise mittels eines Flusssensors in jedem Dispensierkanal eine kanalspezifische Regelgröße zur Reglung der Öffnungszeitdauer für die einzelnen Ventile gebildet wird, können Fehler, die z.B. durch die Toleranzen der Flusssensoren entstehen, korrigiert werden.

Dem Fachmann auf dem Gebiet dieser Erfindung erschließt sich, dass die Erfindung nicht auf die Einzelheiten der vorstehend beispielhaft angeführten Ausführungsformen beschränkt ist, sondern dass die vorliegende Erfindung in anderen speziellen Formen verkörpert sein kann, ohne vom Umfang der Erfindung abzuweichen, die durch die anliegenden Ansprüche festgelegt ist.

### Liste der verwendeten Bezugszeichen

- 1.1 - 1.n: Dispensierkanäle
- 2.1 - 2.n: Ventil
- 3.1.1 - 3.n.n: Kavität
- x.1.1 - x.n.n: Mittelwert
- 4: Messeinrichtung
- 5: Recheneinheit
- 6: Dateneingabeeinheit
- 7: Steuereinheit
- 8.1 - 8.n: Düse
- t.1 - t.n: Öffnungszeitdauer

## Patentansprüche

1. Verfahren zum Abgleichen der Abgabevolumina einer Mehrkanaldosiervorrichtung mit einer Anordnung von Dispensierkanälen 1.1-1.n, die voneinander unabhängig ansteuerbar einzelne Volumina von Dispensierflüssigkeit in Kavitäten 3.1.1-3.n.n abgeben, und bei dem die einzelnen Volumina über die Dispensierkanäle 1.1-1.n gesteuert mittels eines gleichen Steuerwertes abgegeben werden, **gekennzeichnet durch** folgende Verfahrensschritte:
- Vermessen einer volumenrelevanten Größe von allen einzeln in die Kavitäten abgegebenen Volumina
- Zuordnen der Messwerte, zum Steuerwert und zum jeweilig zugehörigen Dispensierkanal 1.1-1.n
- Festlegen eines Abgleichswertes aus den Messwerten und eines für die Messwerte zulässigen Toleranzbandes um den Abgleichswert
- Korrigieren des Steuerwertes nach unten bzw. oben für jedes Ventil 2.1-2.n, dessen zugehörigem Dispensierkanal 1.1-1.n ein Messwert zugeordnet ist, der oberhalb bzw. unterhalb des Toleranzbandes liegt
- Abspeichern der Dispensierkanal-bezogenen Steuerwerte und Messwerte als Datenspeichergruppen.

2. Verfahren nach Anspruch 1, **dadurch gekennzeichnet,**
**dass** pro Dispensierkanal 1.1-1.n eine Vielzahl von Volumina in verschiedene Kavitäten 3.1.1-3.n.n abgegeben werden und aus den zugeordneten Messwerten der Mittelwert gebildet wird, der als Messwert dem Steuerwert und dem jeweiligen Dispensierkanal 1.1-1.n zugeordnet wird.

3. Verfahren nach Anspruch 1, **dadurch gekennzeichnet,**
**dass** als Abgleichswert ein Medianwert der Messwerte verwendet wird.

4. Verfahren nach Anspruch 1, **dadurch gekennzeichnet,**
**dass** als Abgleichswert ein Mittelwert der Messwerte verwendet wird.

5. Verfahren nach Anspruch 1, **dadurch gekennzeichnet,**
**dass** als Abgleichswert ein zum Sollvolumen relevanter Wert verwendet wird.

6. Verfahren nach Anspruch 1, **dadurch gekennzeichnet,**
**dass** der Steuerwert die Öffnungszeitdauer t.1-t.n von Ventilen 2.1-2.n ist, die jeweils in den Dispensierkanälen 1.1-1.n angeordnet sind.

7. Verfahren nach Anspruch 1, **dadurch gekennzeichnet,**
**dass** der Steuerwert der Hub der Kolben von Pumpen ist, die jeweils mit den Dispensierkanälen 1.1-1.n verbunden sind.

8. Verfahren nach Anspruch 1, **dadurch gekennzeichnet,**
**dass** die Verfahrensschritte in vollständiger Reihenfolge mehrfach durchgeführt werden, um die Dispensierkanäle 1.1-1.n auf mehrere Abgabevolumina bzw. deren Toleranzbänder abzugleichen.

9. Verfahren nach Anspruch 1, **dadurch gekennzeichnet,**
**dass** die Speicherdatengruppen durch weitere Speicherdaten ergänzt werden, wie Druck, Temperatur und Viskosität der Dispensierflüssigkeit.

10. Mehrkanaldosiervorrichtung mit einer Anordnung von Dispensierkanälen 1.1-1.n zur Abgabe einzelner Volumina von Dispensierflüssigkeit in Kavitäten 3.1.1-3.n.n einer korrelierenden Anordnung, die jeweils ein voneinander unabhängig über eine Steuergröße steuerbares Dosiermittel aufweisen, mit einer Messeinrichtung 4, einer Recheneinheit 5 und einer mit der Recheneinheit 5 verbundenen Dateneingabeeinheit 6
sowie einer Steuereinheit 7, zur Ansteuerung der Dosiermittel entsprechend der von der Recheneinheit 5 erhaltenen Steuerwerte, **dadurch gekennzeichnet,**
**dass** die Messeinrichtung 4 eine Messeinrichtung ist zur Bestimmung der Volumina der in die einzelnen Kavitäten 3.1.1-3.n.n abgegebenen Dispensierflüssigkeit , und die Recheneinheit 5 ausgelegt ist, um aus den Messwerten einen Abgleichswert festzulegen, an den die Steuerwerte innerhalb eines vorgegebenen Toleranzbandes angepasst werden.

11. Mehrkanaldosiervorrichtung nach Anspruch 10, **dadurch gekennzeichnet,**
**dass** die Messeinrichtung 4 eine gravimetrische Messapparatur ist.

12. Mehrkanaldosiervorrichtung nach Anspruch 10, **dadurch gekennzeichnet,**
**dass** die Messeinrichtung 4 eine photometrische Messapparatur ist.

## Claims

1. A method of balancing the delivery volumes of a multichannel metering device with an arrangement of dispensing channels 1.1-1.n, which deliver individual volumes of dispensing liquid into cavities 3.1.1-3.n.n in a manner which is controllable independently of one another and in which the individual volumes are delivered via the dispensing channel 1.1-1.n in a controlled manner by means of the same control value, **characterised by** the following method steps:
- measuring a volume-related parameter of all the volumes delivered individually into the cavities
- associating the measured values with the control value and with the respective associated dispensing channel 1.1-1.n
- determining a balancing value from the measured values and a tolerance band, which is permissible for the measured values, around the balancing value
- correcting the control value downwardly or upwardly for each valve 2.1-2.n with whose associated dispensing passage 1.1-1.n a measured value is associated which lies above or below the tolerance band
- storing the dispensing channel-related control values and measured values as stored data groups.

2. A method as claimed in Claim 1, **characterised in that** a plurality of volumes are delivered per dispensing passage 1.1-1.n into different cavities 3.1.1-3.n.n and from the associated measured values the mean value is formed, which is associated as a measured value with the control value and the respective dispensing passage 1.1-1.n.

3. A method as claimed in Claim 1, **characterised in that** a median value of the measured values is used as the balancing value.

4. A method as claimed in Claim 1, **characterised in that** an average value of the measured values is used as the balancing value.

5. A method as claimed in Claim 1, **characterised in that** a value related to the desired volume is used as the balancing value.

6. A method as claimed in Claim 1, **characterised in that** the control value is the opening duration t.1-t.n of valves 2.1-2.n, which are arranged in respective dispensing channels 1.1-1.n.

7. A method as claimed in Claim 1, **characterised in that** the control value is the stroke of the pistons of pumps, which are connected to respective dispensing channels 1.1-1.n.

8. A method as claimed in Claim 1, **characterised in that** the method steps are performed a number of times in complete sequence in order to balance the dispensing channels 1.1-1.n to a number of delivery volumes and their tolerance bands.

9. A method as claimed in Claim 1, **characterised in that** the stored data groups are supplemented by further stored data, such as pressure, temperature and viscosity of the dispensing liquid.

10. A multichannel metering device with an arrangement of dispensing passages 1.1-1.n for delivering individual volumes of dispensing liquid into cavities 3.1.1-3.n.n in a corresponding arrangement, which include respective metering means controllable independently from one another by means of a control parameter, including a measuring device 4, a computing unit 5 and a data input unit 6 connected to the computing unit 5 and a control unit 7 for controlling the metering means in accordance with the control values received from the computing unit 5, **characterised in that** the measuring device 4 is a measuring device for determining the volumes of the dispensing liquid delivered into the individual cavities 3.1.1-3.n.n and the computing unit 5 is designed to determine a balancing value from the measured values, to which the control values are adapted within a predetermined tolerance band.

11. A multichannel metering device as claimed in Claim 10, **characterised in that** the measuring device 4 is a gravimetric measuring apparatus.

12. A multichannel metering device as claimed in Claim 10, **characterised in that** the measuring device 4 is a photometric measuring apparatus.

## Revendications

1. Procédé d'égalisation des volumes de distribution d'un dispositif de dosage multicanaux comportant un ensemble de canaux de distribution 1.1-1.n, qui distribuent des volumes individuels de liquide à distribuer dans des cavités 3.1.1-3.n.n, chaque canal de distribution 1.1-1.n pouvant être commandé de manière indépendante des autres, et dans lequel procédé les volumes individuels peuvent être distribués par les canaux de distribution 1.1-1.n, commandé par la même valeur de commande, ledit procédé étant **caractérisé par** les étapes de :
- mesurer une quantité relative au volume pour tous les volumes individuellement distribués dans les cavités,
- attribuer les valeurs mesurées à la valeur de commande et à chaque canal de distribution 1.1-1.n correspondant,
- déterminer une valeur d'égalisation à partir des valeurs mesurées et une bande de tolérance admissible pour les valeurs mesurées et située autour de la valeur d'égalisation,
- corriger les valeurs de commande vers le bas ou vers le haut pour chaque soupape 2.1-2.n, au canal de distribution 1.1-1.n respectif de laquelle on a attribué une valeur mesurée qui est située au-dessus ou au-dessous de la bande de tolérance,
- mémoriser les valeurs de commandes et les valeurs mesurées relatives aux canaux de distribution sous forme de groupes de mémoires de données.

2. Procédé selon la revendication 1, **caractérisé en ce que** plusieurs volumes sont distribués par chaque canal de distribution 1.1-1.n dans des cavités 3.1.1-3.n.n différentes et **en ce que** l'on forme la valeur moyenne des valeurs mesurées attribuées, qui est attribuée comme valeur mesurée à la valeur de commande et au canal de distribution 1.1-1.n respectif.

3. Procédé selon la revendication 1, **caractérisé en ce que** l'on utilise comme valeur d'égalisation une valeur médiane des valeurs mesurées.

4. Procédé selon la revendication 1, **caractérisé en ce que** l'on utilise comme valeur d'égalisation une valeur moyenne des valeurs mesurées.

5. Procédé selon la revendication 1, **caractérisé en ce que** l'on utilise comme valeur d'égalisation une valeur relative au volume de consigne.

6. Procédé selon la revendication 1, **caractérisé en ce que** la valeur de commande est la durée d'ouverture t.1-t.n de soupapes 2.1-2.n qui sont respectivement disposées dans les canaux de distribution 1.1-1.n.

7. Procédé selon la revendication 1, **caractérisé en ce que** la valeur de commande est la course des pistons de pompes qui sont respectivement reliées aux canaux de distribution 1.1-1.n.

8. Procédé selon la revendication 1, **caractérisé en ce que** les étapes procédurales sont effectuées plusieurs fois dans leur séquence complète afin d'égaliser les canaux de distribution 1.1-1.n avec plusieurs volumes de distribution et/ou avec les bandes de tolérance de ceux-ci.

9. Procédé selon la revendication 1, **caractérisé en ce que** les groupes de mémoires de données sont complétés par des données de mémoire additionnelles, telles que la pression, la température et la viscosité du liquide à distribuer.

10. Dispositif de distribution multicanaux, comportant un ensemble de canaux de distribution 1.1-1.n pour la distribution de volumes individuels de liquide à distribuer dans des cavités 3.1.1-3.n.n d'un ensemble corrélé, chacun des deux ensembles présentant un moyen de dosage respectivement commandé de manière indépendante par une quantité de commande, ledit dispositif comportant un moyen de mesure 4, une unité de calcul 5 et une unité d'entrée de données 6 reliée à l'unité de calcul 5,
ainsi qu'une unité de commande 7 destinée à commander les moyens de dosage selon les valeurs de commande reçues de l'unité de calcul 5, ledit dispositif étant **caractérisé en ce que** le moyen de mesure 4 est un moyen de mesure destiné à mesurer les volumes du liquide à distribuer qui est distribuée dans les cavités 3.1.1-3.n.n individuelles, et **en ce que** l'unité de calcul 5 est adaptée à définir, à partir des valeurs mesurées, une valeur d'égalisation à laquelle les valeurs de commande sont adaptées dans une bande de tolérance fixée.

11. Dispositif de distribution multicanaux selon la revendication 10, **caractérisé en ce que** le moyen de mesure 4 est un appareillage de mesure gravimétrique.

12. Dispositif de distribution multicanaux selon la revendication 10, **caractérisé en ce que** le moyen de mesure 4 est un appareillage de mesure photométrique.
